# EUROPÄISCHE PATENTSCHRIFT

(11) **EP 3 789 249 B1**
(45) Veröffentlichungstag und Bekanntmachung des Hinweises auf die Patenterteilung: **30.11.2022**
(21) Anmeldenummer: 19195033.6
(22) Anmeldetag: 03.09.2019
(51) Int. Cl.: B60R 13/08

(54) **VERKLEIDUNGS-VORRICHTUNG**
CLADDING DEVICE
DISPOSITIF D'HABILLAGE

(43) Veröffentlichungstag der Anmeldung: 10.03.2021
(73) Patentinhaber: Maucher Formenbau GmbH & Co. KG, 88074 Meckenbeuren (DE)
(72) Erfinder: STRITTMATTER, Peter, 88046 Friedrichshafen (DE)
(74) Vertreter: Christ, Niko

(56) Entgegenhaltungen:
- EP-A1- 3 527 357
- WO-A2-2011/128858
- DE-A1-102004 053 751
- US-A- 3 077 426

## Beschreibung

Die Erfindung bezieht sich auf eine Verkleidungs-Vorrichtung zur Schalldämmung, insbesondere in Kabinen im Bereich von Geräuschen eines Fahrzeugs, einer Werkzeugmaschine oder dgl., nach dem Oberbegriff des Patentanspruchs 1.

Derartige Verkleidungs-Vorrichtungen werden seit Jahrzehnten bspw. in der Automobilindustrie zur Schalldämmung an Kabinen verwendet. Dabei werden diese Vorrichtungen in von der Kabine vorgegebene Zwischenräume eingelegt. Die Zwischenräume weisen eine dreidimensionale Einbaugeometrie auf, sodass die jeweilige Verkleidungs-Vorrichtung an die jeweilige Einbaugeometrie anzupassen ist. Zudem sind in der Verkleidungs-Vorrichtung Bohrungen oder sonstige Aussparungen einzuarbeiten, durch die Fahrzeugbauteile, bspw. Antriebswellen, elektrische Kabel, Rohre od. dgl., durchgeführt sind.

Aus US 3,077,426 ist eine solche Vorrichtung zur Schalldämmung nach dem Oberbegriff des Anspruchs 1 bekannt. Dabei besteht die Vorrichtung aus einer Trägerplatte und einer Dämmplatte, die flächig miteinander verbunden sind und deren Kontur an die jeweilige Geometrie der Kabine angepasst ist.

Als nachteilig hat sich dabei herausgestellt, dass zwar ein solcher Aufbau einer solchen Vorrichtung beschrieben ist, jedoch wurde nicht erkannt, dass durch diese Vorrichtung ein Bausatz gebildet ist, dessen Geometrie und Befestigungssysteme an unterschiedliche Gegebenheiten individuell anpassbar sind, ohne die gesamte Vorrichtung zu verändern.

Als nachteilig bei den bisher bekannten Verkleidungs-Vorrichtungen hat sich herausgestellt, dass diese äußerst unhandlich zu montieren sind, da diese Vorrichtungen als dreidimensionale großflächige Bauteile dem jeweiligen Fahrzeughersteller zur Verfügung gestellt sind. Die Hersteller von derartigen Verkleidungs-Vorrichtungen erhalten nämlich von dem jeweiligen Fahrzeughersteller die Einbaugeometrie des jeweiligen Fahrzeuges, die sich je nach Fahrzeuggröße über mehrere Meter Länge und Höhe erstrecken kann. Folglich bauen diese Verkleidungs-Vorrichtungen äußerst groß und weisen eine entsprechend hohe Eigengewichtskraft auf. Somit ist der Transport- und Montageaufwand äußerst komplex und kompliziert.

Ferner ist nachteilig, dass in Kabinen die Geräuschkulisse je nach Position der die Geräusche verursachenden Bauteile unterschiedlich verläuft. Die herstellerseitig angelieferten Verkleidungs-Vorrichtungen sind jedoch mit einer über deren gesamte Fläche gleich groß bemessenen Höhe der Dämmplatte versehen. Eine Anpassung der Verkleidungs-Vorrichtung an entsprechende Bereiche von Motorgeräuschen ist mittels der bekannten Verkleidungs-Vorrichtung nicht möglich.

Es ist daher Aufgabe der Erfindung, eine Verkleidungs-Vorrichtung der eingangs genannten Gattung derart weiterzubilden, dass durch diese zum einen eine einfache und folglich kostengünstige Montage möglich ist und dass zum anderen die Transport- sowie Herstellungskosten für die Verkleidungs-Vorrichtung minimiert sind. Zudem soll die Dämmplatte der Verkleidungs-Vorrichtung bereichsweise dünner oder dicker und/oder verschiedene Dichten in Abhängigkeit von der individuell vorgegebenen Geräuschkulisse der Kabine versehen sein.

Diese Aufgabe ist durch die Merkmale des kennzeichnenden Teils von Patentanspruch 1 gelöst.

Weitere vorteilhafte Weiterbildungen der Erfindung ergeben sich aus den Unteransprüchen.

Dadurch, dass die Trägerplatte und die Dämmplatte paarweise in Form eines Bausatzes vereinzelt sind und dass der jeweilige Bausatz an benachbarte Bausätze nach Art eines Stecksystems arretiert ist, kann eine Verkleidungs-Vorrichtung hergestellt sein, die aus einer Vielzahl von vereinzelten Bausätzen besteht, die durch das Stecksystem derart zusammengesetzt werden können, dass die Einbaugeometrie der jeweiligen Kabine vollständig mit einer Verkleidungs-Vorrichtung ausgekleidet ist. Zudem können die Bereiche der Kabine in Abhängigkeit von den dort auftretenden Geräuschen optimiert isoliert bzw. gedämmt sein, da in Bereichen mit einer hohen Geräuschkulisse eine dickere Dämmplatte verwendet ist als in Bereichen mit geringerem Geräuschpegel.

Da die Verbindungsbereiche zwischen zwei benachbarten Bausätzen der Verkleidungs-Vorrichtung derart ausgestaltet sind, dass die Steckzapfen und die Aufnahmeöffnungen durch überstehende Dämmplatten bzw. überstehende Trägerplatten überlappend geräuschdicht verdeckt sind, treten die Schallwellen durch die Verbindungsbereiche zwischen zwei benachbarten Bausätzen nicht hindurch, sondern werden vielmehr von der darunterliegenden Dämmplatte aufgenommen, also gedämpft.

Die Verbindung von zwei benachbarten Bausätzen mittels der Steckzapfen und Aufnahmeöffnungen, die eine Hinterschneidung im montierten Zustand bilden, ist eine zuverlässige und dauerhafte Fixierung der aneinander gesteckten Bausätze gewährleistet; zumal die jeweiligen Bausätze in einem Zwischenraum einer Kabine eingesetzt sind und folglich keinen Raum haben, sich auseinander senkrecht zu dem Stecksystem bewegen.

Die Herstellung solcher vereinzelten Bausätze für eine Verkleidungs-Vorrichtung kann individuell angefertigt sein. Dies bedeutet, dass die Trägerplatte zunächst in einem Formwerkzeug erhitzt und in die gewünschte dreidimensionale oder flächige Ausgestaltung überführt ist und dass anschließend zwischen der Trägerplatte und einem zweiten Formwerkzeug die verflüssigten Komponenten der Dämmplatte eingefüllt sind. Während des Aushärtens verbinden sich die Partikel der Dämmplatte mit der Trägerplatte, sodass eine dauerhafte und flächige Fixierung zwischen der Trägerplatte und der Dämmplatte entsteht. Aufgrund der individuellen Ausgestaltungsmöglichkeit der Formwerkzeuge können daher beliebige dreidimensionale Formen für derartige Bausätze angefertigt sein und die Dicke der Dämmplatte kann bereichsweise unterschiedlich verlaufen. Dies reduziert vorteilhafterweise Kosten, denn für die Dämmplatte kann durch die dünneren Aufbauten Material eingespart sein.

In der Zeichnung ist eine erfindungsgemäße Verkleidungs-Vorrichtung dargestellt, die nachfolgend näher erläutert ist. Im Einzelnen zeigt:
- Figur 1: ein dreidimensionales Gebilde einer Verkleidungs-Vorrichtung, die beispielsweise im Bereich einer Kabine eines Automobils eingebaut ist und die eine Vielzahl von Durchbrüchen, Bohrungen oder Aussparungen für mechanische und elektrische Komponenten aufweist, in perspektivischer Ansicht,
- Figur 2: ein Ausschnitt der Verkleidungs-Vorrichtung nach Figur 1, mit acht Bausätzen, bestehend aus jeweils einer Trägerplatte und einer Dämmplatte, die mittels eines Stecksystems nach Art einer Hinterschneidung miteinander arretiert sind,
- Figur 3: zwei Bausätze gemäß Figur 2, im vormontierten Zustand und mit einer nockenförmigen Außenkontur der Stirnseite der benachbarten Dämmplatten und eine daran angepasste Außenkontur der benachbarten Dämmplatten zur geräuschdichten Überlappung des Verbindungsbereiches zwischen den beiden Bausätzen,
- Figuren 4a bis 4c: drei weitere Ausführungsvarianten von Stecksystemen an der jeweiligen Trägerplatte, in Draufsicht,
- Figur 5: die beiden Bausätze gemäß Figur 3, mit einer treppenförmigen Außenkontur und
- Figuren 6a bis 6c: der Ablauf eines Herstellungsverfahrens für einen der Bausätze gemäß Figur 2 als schematische Darstellung.

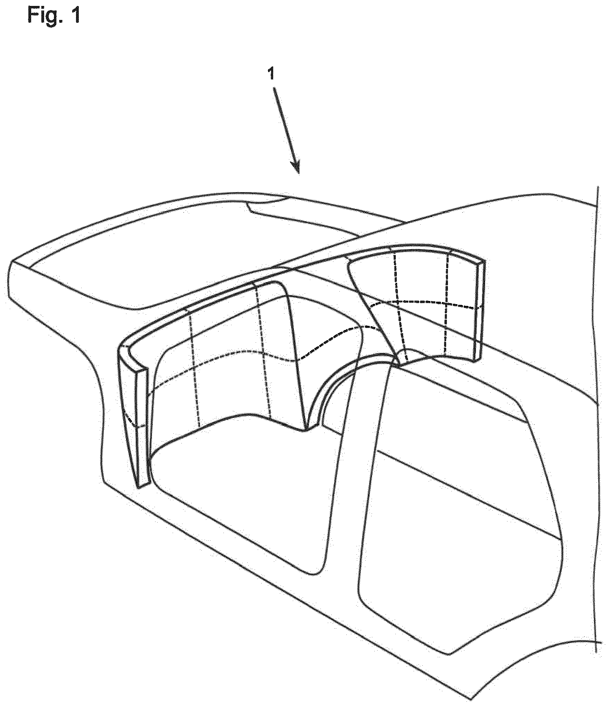

Aus Figur 1 ist eine Verkleidungs-Vorrichtung 1 in einer allgemeingültigen dreidimensionalen Struktur zu entnehmen, die dazu dient, Kabinen von Automobilen oder dgl. geräuschdicht zu dämmen. Diese Verkleidungs-Vorrichtung 1 weist eine Vielzahl von Aussparungen, Bohrungen oder Durchbrüchen auf, durch die elektrische und mechanische Komponenten, beispielsweise elektrische Kabel, Getriebewellen oder Antriebswellen durchgeführt sind. Die Vorrichtung 1 soll dazu dienen, die Kabinen im Bereich von Geräuschen zu dämmen, sodass möglichst geringe oder keine Innengeräusche in der Kabine von den Antriebsaggregaten des Fahrzeuges gelangen.

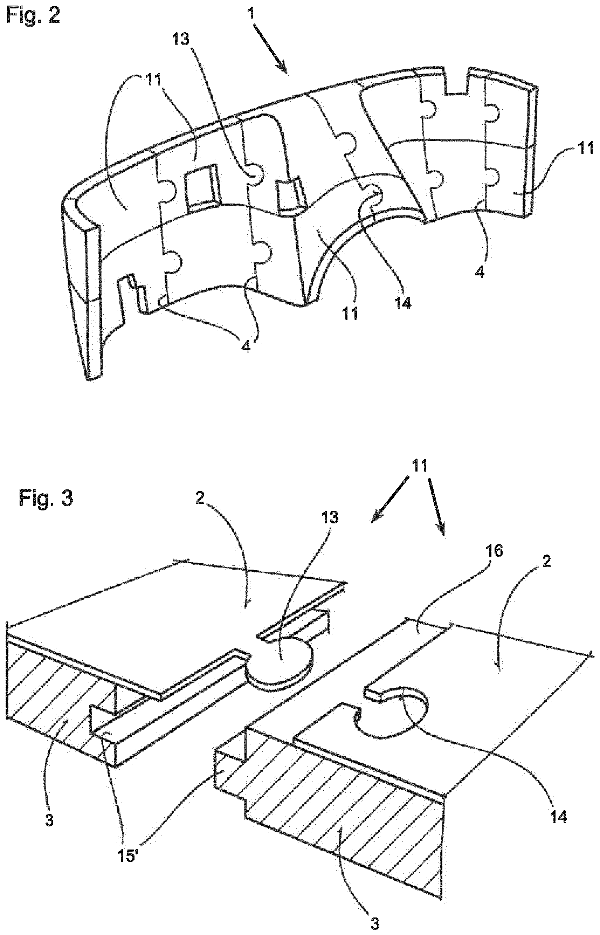

Zu diesem Zweck besteht die Vorrichtung 1 gemäß den Figuren 2 und 3 aus einer Trägerplatte 2 und einer Dämmplatte 3. Die Trägerplatte 2 ist dabei wesentlich dünnwandiger als die Dämmplatte 3 ausgestaltet. Zudem besteht die Trägerplatte 2 aus einem Polyurethan-Weichschaumstoff und die Dämmplatte 3 aus einer Schwerdämmfolie auf der Basis POE/LDPE mit anorganischen Füllstoffen. Wie nachfolgend näher erläutert ist, sind die Trägerplatten 2 und die Dämmplatten 3 über ihre gesamte benachbarte Oberfläche miteinander fest verbunden.

Um die Verkleidungs-Vorrichtung 1 möglichst zeitsparend und einfach in die Kabine einbauen zu können, sind herstellerseitig geeignete Verbindungsbereichen 4 vorzusehen. Die Verbindungsbereiche 4 liegen dabei in einer Ebene. Dies bedeutet, dass durch die Trennung der Vorrichtung 1 in den Verbindungsbereichen 4 eine 180° Stoßfuge entsteht. Die Vorrichtung 1 ist demnach in eine Vielzahl von vereinzelten Bausätzen 11 unterteilt, die individuell herstellerseitig gefertigt sind. Diese Bausätze 11 sind wesentlich kleiner bemessen und bauen leichter als die gesamte Verkleidungs-Vorrichtung 1 gemäß Figur 1 im zusammengebauten Zustand.

Um die benachbarten Bausätze 11 aneinander arretieren zu können, ist ein Stecksystem 12 vorgesehen, das aus mindestens einem, in dem gezeigten Ausführungsbeispiel aus zwei benachbart zueinander an der Trägerplatte 2 angeordneten Steckzapfen 13 und in die dazu benachbarte Trägerplatte 2 eingearbeitete Aufnahmeöffnungen 14 gebildet ist. Die Steckzapfen 13 stehen über die darunter angeordnete Dämmplatte 3 über und die Aufnahmeöffnungen 14 in dem benachbarten Bausatz 11 werden nach unten von der darunter liegenden Dämmplatte 3 abgedeckt. Folglich entsteht im Verbindungsbereich 4 eine geräuschdichte überlappende Anordnung von zwei benachbarten Bausätzen 11, da der Übergangsbereich zwischen den Steckzapfen 13 und der jeweiligen Aufnahmeöffnungen 14 durch die darunterliegende überstehende Dämmplatte 3 verschlossen sind.

Das Stecksystem 12 bildet demnach eine Hinterschneidung, sodass die zusammengesetzten Bausätze 11 nicht mehr voneinander getrennt werden können, wenn diese in einem entsprechend eng bemessenen Aufnahmeraum, der in die Kabine eingearbeitet ist, eingesetzt sind. Die Bausätze 11 werden demnach durch die Innenwände des Zwischenraumes der Kabine arretiert und die Hinterschneidungen des Stecksystems 12 verlaufen senkrecht zu diesen Innenwänden. Zudem können die Bausätze 11 vereinzelt in den Aufnahmeraum der Kabine eingelegt werden, um nachfolgend mit dem dazu benachbarten Bausatz 11 verbunden zu sein.

In Figur 3 weisen die Steckzapfen 13 eine ovale oder ellipsenförmige Außenkontur auf und die dazu korrespondierenden Aufnahmeöffnungen 14 sind an diese Außenkontur der Steckzapfen 13 entsprechend angepasst. Zudem ist die Stirnseite der Dämmplatte 3, die einer benachbarten Dämmplatte 3 zugewandt ist, nockenförmig ausgestaltet und die dazu benachbarte Dämmplatte 3 weist eine Innenkontur auf, um die überstehende nockenförmige Außenkontur 15' aufzunehmen. Somit entsteht auch durch die Dämmplatten 3, sobald diese miteinander verbunden sind, eine gewisse Arretierung der benachbarten Bausätze 11.

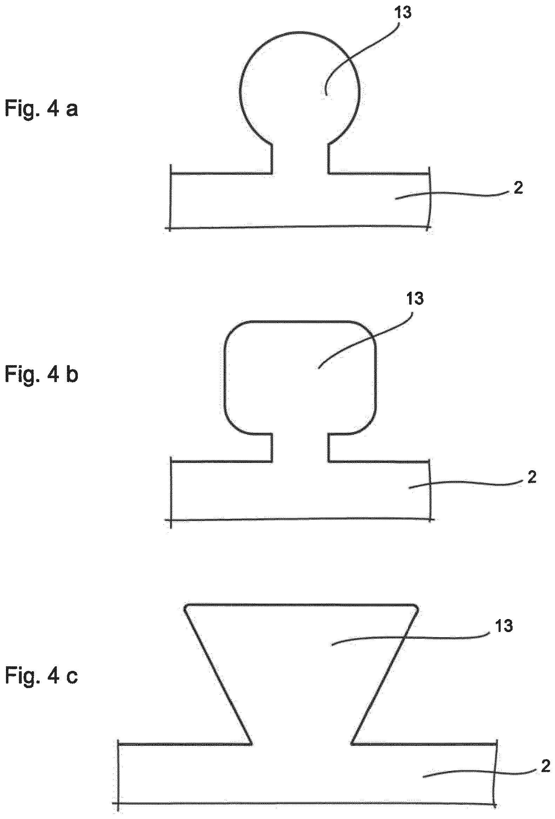

In den Figuren 4a, 4b und 4c sind weitere Ausgestaltungsmöglichkeiten der Steckzapfen 13 und der jeweils daran anzupassenden Aufnahmeöffnung 14 abgebildet. Die Steckzapfen 13 können dabei einen Kugelkopf, ein Viereck mit gerundeten Kanten oder als Schwalbenschwanz ausgestaltet sein.

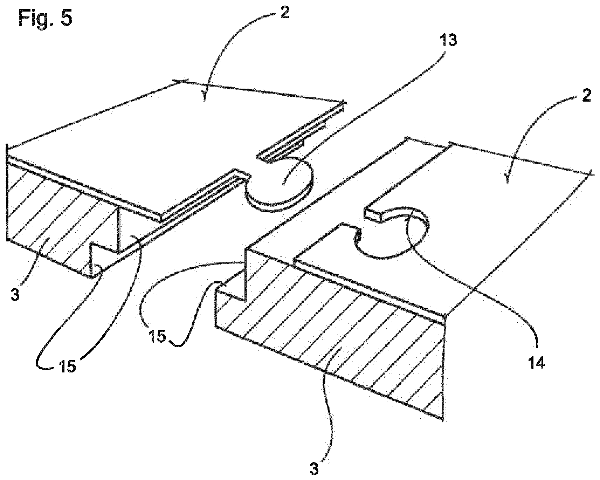

Figur 5 ist zu entnehmen, dass die Dämmplatten 3 eine treppenförmige Außenkontur 15 im Bereich der benachbarten Dämmplatte 3 zugewandten Stirnseite aufweist. Auch durch diese treppenförmige Außenkontur 15 ist eine entsprechende Fixierung der miteinander verbundenen Bausätze 11 erreicht.

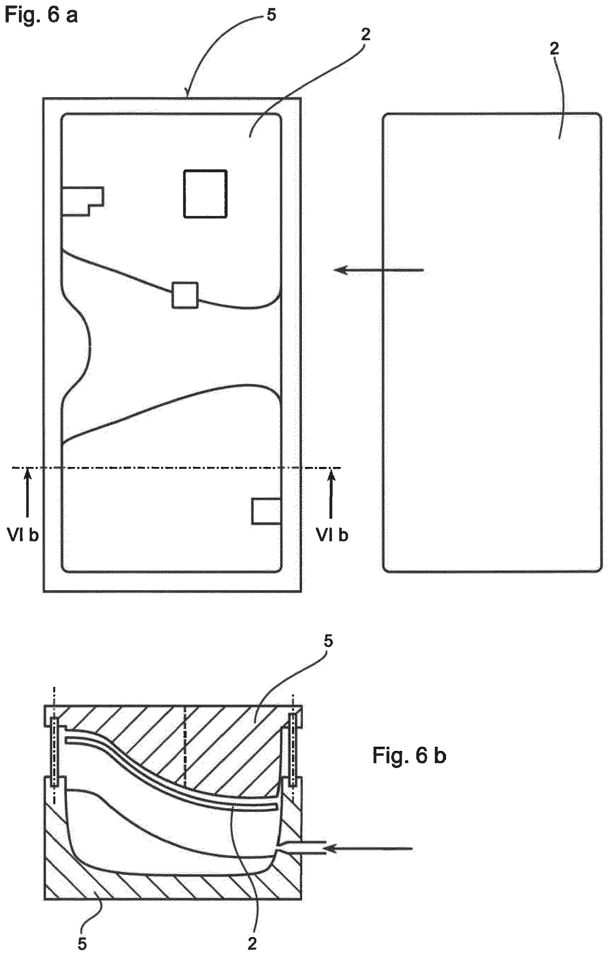

Gemäß Figur 6a wird die Trägerplatte 2 als Gebinde ausgeliefert und kann zur weiteren Verarbeitung plattenförmig vereinzelt sein. Eine derartige Platte wird in ein Formwerkzeug 5 eingelegt und in diesem erhitzt oder erwärmt. Das Formwerkzeug 5 weist bereits eine entsprechende Oberflächenkontur auf, die auf die eingelegte Platte durch Druckkräfte übertragen ist.

Sobald die gewünschte Geometrie der Trägerplatte 2 erreicht ist, wird diese auf ein weiteres Formwerkzeug 6 aufgesetzt. Zwischen den beiden Formwerkzeug 5 und 6 ist demnach zum einen die Trägerplatte 2 und ein Zwischenraum 9 vorgesehen. In eine Einfüllöffnung 10 wird das Ausgangsmaterial für die Dämmplatte 3 eingespritzt. Der Zwischenraum 9 ist dabei als Abstand zwischen einer Oberfläche der Trägerplatte 2 und dem Formwerkzeug 6 anzusehen. Die Kontur des Formwerkzeugs 6 gibt die Wandstärke oder Dicke bzw. Höhe der herzustellenden Dämmplatte 3 vor. Da die Trägerplatte 2 und der eingefüllte Werkstoff für die Dämmplatte 3 erwärmt bzw. erhitzt sind und ein vorgegebener Anpressdruck zwischen den beiden Formwerkzeugen 5 und 6 einstellbar ist, verbinden sich die gegenseitig zugewandten Oberflächen der Trägerplatte 2 und der Dämmplatte 3 miteinander.

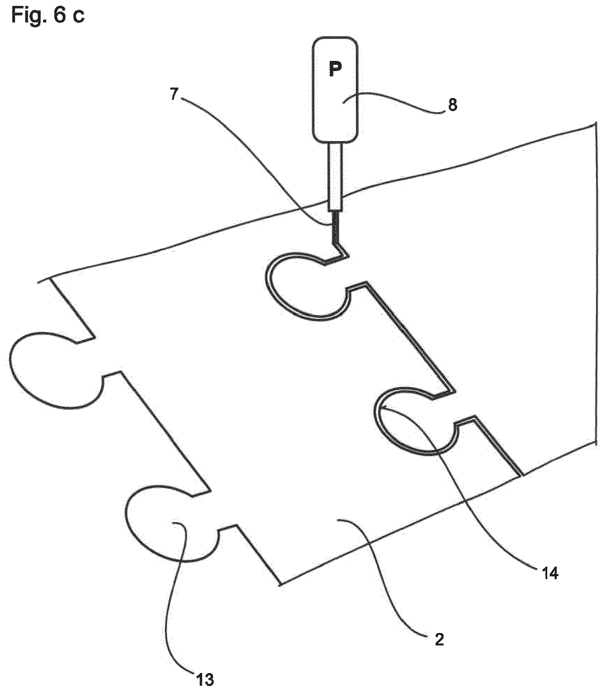

Die Konturen der Steckzapfen 13 und der Aufnahmeöffnung 14 werden gemäß Figur 6c anschließend mittels eines Wasserstrahls 7, der von einem Schneidwerkzeug 8 zur Verfügung gestellt ist, in die Trägerplatte 2 eingearbeitet. Die Stirnseiten der Dämmplatte 3 können durch die entsprechende Ausgestaltung des Formwerkzeug 6, also als treppen- förmige Außenkontur 15 bzw. als nockenförmige Außenkontur 15' bereits während des Verbindungsvorganges der Trägerplatte 2 mit der Dämmplatte 3 vorgegeben sein.

Der Verbund aus Trägerplatte 2 und Dämmplatte 3 kann aus beliebigen Werkstoffpaarungen gebildet sein. So sind bspw. textile Gewebe, Schwerdämmfolien mit anorganischen Füllstoffen, Polyurethane, Polyester, Vlies od. dgl. als Material zur Herstellung der Dämmplatte 3 geeignet.

Allein maßgeblich für die Beschaffenheit der Dämmplatte 3 ist dabei Schallabsorption oder -isolierung.

Die Wandstärken und/oder die Dichten der Dämmplatte 3 können bereichsweise unterschiedlich ausgestaltet sein.

Der Werkstoff für die Trägerplatte 2 soll möglichst formstabil und biegefest sein, um eine zuverlässige Arretierung zwischen benachbarten Trägerplatten 2 zu erreichen.

## Patentansprüche

1. Verkleidungs-Vorrichtung (1) zur Schalldämmung, insbesondere in Kabinen im Bereich von Gehäusen eines Fahrzeugs, einer Werkzeugmaschine oder dgl., bestehend aus einer Trägerplatte (2) und einer Dämmplatte (3), die flächig miteinander verbunden sind und deren Kontur an die jeweilige Geometrie der Kabine angepasst ist,
**dadurch gekennzeichnet,**
**dass** die Trägerplatte (2) und die Dämmplatte (3) paarweise in Form eines Bausatzes (11) vereinzelt sind und dass der jeweilige Bausatz (11) an benachbarte Bausätze (11) nach Art eines Stecksystems (12) arretiert ist,
**dass** das jeweilige Stecksystem (12) als miteinander verbindbaren Steckzapfen (13) und Aufnahmeöffnungen (14) besteht und dass die Steckzapfen (13) an der Trägerplatte (2) überstehend zu der daran befestigen Dämmplatte (3) angeformt sind, dass die Aufnahmeöffnungen (11) in einer der benachbarten Trägerplatten (2) eingearbeitet sind und dass die Aufnahmeöffnungen (14) von den dazu benachbarten Dämmplatten (3) abgedeckt sind,
**dass** die Steckzapfen (13) und die jeweils mit diesen zu verbindenden Aufnahmeöffnungen (14) eine ineinandergreifende Kontur nach Art einer Hinterschneidung aufweisen,
und **dass** die Trägerplatte (2) aus einem Polyurethan-Weichschaumstoff und die Dämmplatte (3) aus einer Schwerdämmfolie auf der Basis POE/LDPE mit anorganischen Füllstoffen hergestellt ist und dass die Verbindung zwischen der jeweiligen Trägerplatte (2) und der Dämmplatte (3) in einem zweiteiligen Formwerkzeug (5, 6) während der Verformung stattfindet.

2. Verkleidungs-Vorrichtung nach Anspruch 1,
**dadurch gekennzeichnet,**
**dass** die Höhe der Dämmplatte (3) über deren Fläche bereichsweise unterschiedlich ausgestaltet ist und/oder dass die Dichten der Dämmplatte (3) verschieden sind.

3. Verkleidungs-Vorrichtung nach einem der vorgenannten Ansprüche,
**dadurch gekennzeichnet,**
**dass** die jeweilige Dämmplatte (3) im Verbindungsbereich (4) über deren Höhe mit einer treppenförmigen oder nockenförmigen Außenkontur (15, 15') ausgestaltet ist und dass die dazu benachbart angeordnete Dämmplatte (3) eine daran angepasste treppenförmige oder nockenförmige Außenkontur (15, 15') aufweist.

4. Verkleidungs-Vorrichtung nach einem der vorgenannten Ansprüche,
**dadurch gekennzeichnet,**
**dass** die Höhe der Dämmplatte (3) wesentlich größer als die Höhe der jeweiligen Trägerplatte (2) bemessen ist und dass die Biegesteifigkeit der Trägerplatte (2) größer als die Biegesteifigkeit der Dämmplatte (3) ist.

5. Verkleidungs-Vorrichtung nach Anspruch 1,
**dadurch gekennzeichnet,**
**dass** die Steckzapfen (13) als Ellipse, als Kugelkopf, als Schwalbenschwanz und/oder als mehreckige Kontur ausgestaltet sind und dass die jeweilige Aufnahmeöffnung (14) eine Innenkontur aufweist, die an die Außenkontur der jeweiligen Steckzapfen (13) angepasst ist.

6. Verkleidungs-Vorrichtung nach einem der vorgenannten Ansprüche,
**dadurch gekennzeichnet,**
**dass** der Verbindungsbereich (4) zwischen zwei benachbarten Steckzapfen (13) und deren Aufnahmeöffnungen (14) mittels der beiden Dämmplatten (3) geräuschdicht überlappt ist.

7. Verkleidungs-Vorrichtung nach einem der vorgenannten Ansprüche,
**dadurch gekennzeichnet,**
**dass** der Verbindungsbereich (4) zwischen zwei benachbarten Bausätzen (11) in einer Ebene angeordnet sind, die von der Einbaugeometrie der Kabine vorgegeben ist.

## Claims

1. A cladding device (1) for sound insulation, in particular in cabins in the area of housings of a vehicle, a machine tool or the like, consisting of a support plate (2) and an insulating panel (3), which are connected to one another over their surface and whose contour is adapted to the respective geometry of the cabin,
**characterized in that** the support plate (2) and the insulating panel (3) are separated in pairs in the form of an assembly (11) and that each of the assemblies (11) is locked to adjacent assemblies (11) in the manner of a plug-in system (12), **in that** the respective plug-in system (12) consists of plug-in pins (13) and receiving openings (14), which can be connected to one another, and **in that** the plug-in pins (13) are integrally formed on the support plate (2) so as to project from the insulating panel (3) that is mounted thereto, **in that** the receiving openings (11) are incorporated in one of the adjacent support plates (2), and **in that** the receiving openings (14) are covered by the insulating panels (3) adjacent thereto, **in that** the plug-in pins (13) and the respective receiving openings (14) to be connected thereto have an interlocking contour in the manner of an undercut, and **in that** the support plate (2) is made of a polyurethane soft foam and the insulating panel (3) is made of a heavy insulating foil on the basis of a POE/LDPE with inorganic fillers and that the connection between the respective support plate (2) and the insulating panel (3) takes place in a two-part moulding tool (5, 6) during the deformation.

2. The cladding device according to claim 1, **characterized in that** over its surface, the height of the insulating panel (3) varies in some areas and/or **in that** the densities of the insulating panel (3) vary.

3. The cladding device according to any of the preceding claims, **characterized in that** in the area of connection (4), the respective insulating panel (3) is designed such as to have a step-shaped or cam-shaped outer contour (15, 15') over its height and **in that** the insulating panel (3) arranged adjacent thereto has a step-shaped or cam-shaped outer contour (15, 15') adapted thereto.

4. The cladding device according to any of the preceding claims, **characterized in that** the height of the insulating panel (3) is dimensioned such as to be substantially greater than the height of the respective support plate (2) and **in that** the flexural rigidity of the support plate (2) is greater than the flexural rigidity of the insulating panel (3).

5. The cladding device according to claim 1, **characterized in that** the plug-in pins (13) are designed as an ellipse, a ball head, a dovetail and/or a polygonal contour, and **in that** the respective receiving opening (14) has an inner contour which is adapted to the outer contour of the respective plug-in pins (13).

6. The cladding device according to any of the preceding claims, **characterized in that** the area of connection (4) between two adjacent plug-in pins (13) and their receiving openings (14) is overlapped by means of the two insulating panels (3) in a noise-proof manner.

7. The cladding device according to any of the preceding claims, **characterized in that** the area of connection (4) between two adjacent assemblies (11) are arranged in a plane that is predetermined by the installation geometry of the cabin.

## Revendications

1. Dispositif d'habillage (1) pour l'insonorisation, en particulier dans des cabines au niveau des caisses d'un véhicule, d'une machine-outil ou analogue, composé d'une plaque de support (2) et d'un panneau isolant (3), qui sont reliés l'un avec l'autre en surface et dont le contour est adapté à la géométrie respective de la cabine,
**caractérisé en ce que** la plaque de support (2) et le panneau isolant (3) sont séparés par paires sous la forme d'un assemblage (11) et que l'assemblage respectif (11) est bloqué sur des assemblages voisins (11) à la manière d'un système d'enfichage (12), **en ce que** le système d'enfichage respectif (12) se compose de tenons d'enfichage (13) et d'ouvertures de réception (14) pouvant être reliés les uns aux autres et **en ce que** les tenons d'enfichage (13) sont formés sur la plaque de support (2) en faisant saillie par rapport au panneau isolant (3) qui y est attaché, **en ce que** les ouvertures de réception (11) sont ménagées dans l'une des plaques de support (2) voisines et **en ce que** les ouvertures de réception (14) sont recouvertes par les panneaux isolants (3) adjacents à celles-ci, **en ce que** les tenons d'enfichage (13) et les ouvertures de réception (14) à relier respectivement à ceux-ci présentent un contour s'engageant les uns dans les autres à la manière d'une contredépouille, et **en ce que** la plaque de support (2) est fabriquée à partir d'une mousse souple de polyuréthane et **en ce que** le panneau isolant (3) est fabriqué à partir d'une feuille d'isolation lourde à base de POE/LDPE avec des charges anorganiques et **en ce que** la liaison entre la plaque de support respective (2) et le panneau isolant (3) a lieu dans un outil de formage en deux parties (5, 6) pendant la déformation.

2. Dispositif d'habillage selon la revendication 1, **caractérisé en ce que** sur sa surface la hauteur du panneau isolant (3) est configurée différemment dans certaines zones et/ou **en ce que** les densités du panneau isolant (3) diffèrent.

3. Dispositif d'habillage selon l'une des revendications précédentes, **caractérisé en ce que** sur sa hauteur le panneau isolant respectif (3) est configuré dans la zone de liaison (4) avec un contour extérieur (15, 15') en forme d'escalier ou de came et **en ce que** le panneau isolant (3) adjacent à celui-ci présente un contour extérieur (15, 15') en forme d'escalier ou de came adapté à celui-ci.

4. Dispositif d'habillage selon l'une des revendications précédentes, **caractérisé en ce que** la hauteur du panneau isolant (3) est dimensionnée sensiblement plus grande que la hauteur de la plaque de support respective (2) et **en ce que** la rigidité à la flexion de la plaque de support (2) est supérieure à la rigidité à la flexion du panneau isolant (3).

5. Dispositif d'habillage selon la revendication 1, **caractérisé en ce que** les tenons d'enfichage (13) sont réalisés sous forme d'ellipse, de tête sphérique, de queue d'aronde et/ou de contour polygonal et **en ce que** l'ouverture de réception respective (14) présente un contour intérieur qui est adapté au contour extérieur du tenon d'enfichage respectif (13).

6. Dispositif d'habillage selon l'une des revendications précédentes, **caractérisé en ce que** la zone de liaison (4) entre deux tenons d'enfichage (13) voisins et leurs ouvertures de réception (14) est enchevauchée de manière étanche au bruit au moyen des deux panneaux isolants (3).

7. Dispositif d'habillage selon l'une des revendications précédentes, **caractérisé en ce que** la zone de liaison (4) entre deux assemblages (11) voisins sont disposée dans un plan qui est déterminé par la géométrie de montage de la cabine.
